# FASCICULE DE BREVET EUROPEEN

(11) **EP 1 166 376 B1**
(45) Date de publication et mention de la délivrance du brevet: **05.11.2003**
(21) Numéro de dépôt: 00910924.0
(22) Date de dépôt: 10.03.2000
(51) Int. Cl.: H01M 2/10, A47B 87/02

(54) **COFFRE POUR ENSEMBLE DE BATTERIES D'ACCUMULATEURS ELECTRIQUES**
KASTEN FÜR ELEKTRISCHE AKKUMULATOREINHEIT
BOX FOR SET OF ELECTRIC STORAGE BATTERIES

(30) Priorité: 11.03.1999 FR 9903012
(43) Date de publication de la demande: 02.01.2002
(73) Titulaire: HAWKER SA, 62000 Arras (FR)
(72) Inventeur: DREULLE, Claude, Maurice, F-62217 Beaurains (FR); LENAIN, Pierre, Georges, F-62000 Arras (FR)
(74) Mandataire: Neyret, Daniel
(86) Numéro de dépôt international: FR0000598
(87) Numéro de publication internationale: WO00054349

(56) Documents cités:
- EP-A- 0 405 803
- EP-A- 0 575 060

## Description

La présente invention est relative à un coffre pour ensemble de batteries d'accumulateurs électriques, en particulier pour véhicule automoteur électrique, notamment pour engin de manutention, particulièrement adapté pour recevoir des batteries constituées d'éléments étanches du type à recombinaison de gaz.

Comme cela est classique, pour l'alimentation des véhicules électriques on utilise un assemblage de batteries, capable chacune de délivrer une tension par exemple de l'ordre de 2 volts, ces batteries étant placées en série ou en parallèle dans un caisson venant se loger dans un logement prévu à cet effet dans les véhicules.

Comme on le conçoit, afin de diminuer le nombre de cycles de charge et de décharge des batteries et d'augmenter en conséquence leur durée de vie, il est nécessaire d'embarquer un grand nombre de batteries afin de pouvoir disposer d'une énergie électrique suffisante.

Le document EP-A-0 575 060 divulgue un coffre pour ensemble de batteries d'accumulateurs électriques, dont les parois latérales sont constituées d'un assemblage de modules empilés unitaires, placés indépendamment les uns à côté des autres. Le document EP-A-0 405 803 divulgue un coffre pour ce même usage, qui ne comporte pas de parois latérales et n'est pas constitué d'un assemblage de modules empilés, mais d'une paire d'éléments montés en regard l'un de l'autre. Ces ensembles sont des systèmes stationnaires, non destinés à être embarqués dans un véhicule électrique. Ils ne permettent pas la mise en place rapide de plusieurs batteries à la fois sur une même paire d'éléments de paroi.

Le but de l'invention est de fournir un coffre pour batteries capable de contenir un nombre élevé de batteries d'accumulateurs électriques, et ce, dans un encombrement restreint.

Elle a donc pour objet coffre pour ensemble de batteries d'accumulateurs électriques comprenant au moins deux parois latérales s'étendant de façon généralement parallèle et délimitant entre elles un logement de réception des batteries, caractérisé en ce que les parois latérales sont constituées d'un assemblage de modules élémentaires empilés comprenant chacun une paire d'éléments de paroi montés l'un en regard de l'autre.

On adapte ainsi l'encombrement général du coffre en fonction du nombre de batteries embarquées et l'on diminue donc l'espace libre non occupé.

Le coffre selon l'invention peut en outre comporter une ou plusieurs des caractéristiques suivantes, prises isolément ou selon toutes les combinaisons techniquement possibles :
- chaque élément de paroi a la forme d'un profilé et comporte au moins un bord plié délimitant conjointement avec un bord plié de l'élément de paroi monté en regard, un support pour au moins une rangée de batteries ;
- il comporte en outre des moyens de maintien des éléments de batteries ;
- les moyens de maintien comportent une tige amovible s'étendant au travers des bords pliés des éléments de paroi empilés ;
- il comporte en outre deux flasques d'extrémité munis chacun de pattes de fixation des éléments de paroi ;
- les flasques d'extrémité sont munies d'ouïes d'aération des éléments de batteries ;
- les flasques d'extrémité sont munies chacun d'un point de préhension destiné à coopérer avec un appareil de levage.

L'invention a également pour objet un coffrage pour ensemble d'éléments de batteries d'accumulateurs électriques caractérisé en ce qu'il est constitué d'un ensemble de coffres tel que défini ci-dessus.

D'autres caractéristiques et avantages ressortiront de la description, donnée uniquement à titre d'exemple et faite en référence aux dessins annexés sur lesquels :
- la figure 1 est une vue en perspective éclatée d'un coffre conforme à l'invention; et
- la figure 2 est une vue en perspective d'un module entrant dans la constitution du coffre de la figure 1.

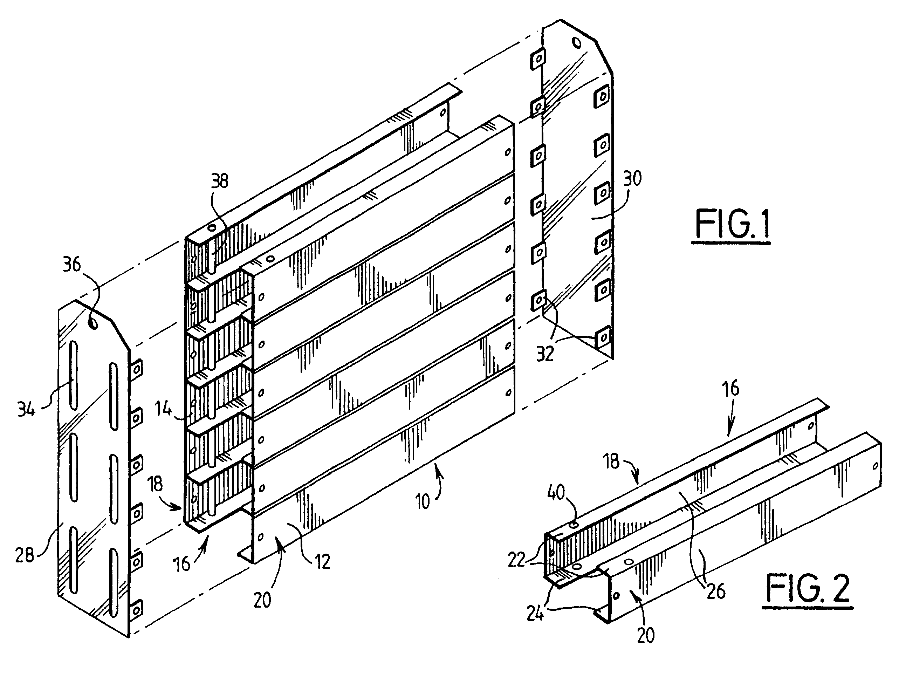

Sur la figure 1, on a représenté un coffre de batteries pour véhicule automoteur électrique, désigné par la référence numérique générale 10, positionné de façon supposée verticale.

Il est destiné a recevoir un ensemble de batteries d'accumulateurs électriques, en particulier des éléments étanches du type à recombinaison de gaz, et à être placé dans un logement prévu à cet effet dans un véhicule pour constitué une source d'alimentation en énergie électrique motrice.

Le coffre 10 comporte deux parois latérales 12 et 14 espacées l'une de l'autre et délimitant entre elles un logement dans lequel sont disposés les batteries. Par exemple, chaque batterie est capable de délivrer une tension de l'ordre de 2 volts.

En se référant également à la figure 2, les parois latérales 12 et 14 sont constituées par l'assemblage de modules élémentaires interchangeables empilés, tels que 16. Le nombre de modules utilisés dépend du nombre de batteries à embarquer.

Chaque module 16 comporte une paire d'éléments de paroi 18 et 20 disposés, à l'état assemblé, en regard l'un de l'autre.

Chaque élément de paroi à la forme d'un profilé en U dont les branches 22 et 24 tournées vers l'intérieur du logement permettent un empilement des éléments de parois les uns sur les autres et dont la base 26 est destinée a constituer, après assemblage et conjointement avec les autres éléments de paroi de l'empilement, la paroi latérale proprement dite du coffre 10.

Plus particulièrement, à l'état assemblé, les branches inférieures 24 des éléments de paroi 18 et 20 appareillés constituent conjointement un support destiné a recevoir une ou plusieurs rangés de batteries d'accumulateurs électriques, ces batteries étant connectées en série ou en parallèle.

En se référant à nouveau à la figure 1, le coffre 10 comporte en outre deux flasques d'extrémité 28 et 30 venant se fixer sur les extrémités libres du caisson constitué par l'assemblage des modules 16 et dont au moins l'un est monté de façon amovible pour le montage ou la dépose des batteries dans le coffre 10.

Plus particulièrement, chaque flasque 28 et 30 est doté de pattes de fixation, telles que 32, disposées par paires et assurant chacune la fixation d'un module élémentaire 16.

On notera que les flasques 28 et 30 sont dimensionnés de manière à espacer les éléments de paroi 18 et 20 de chaque module 16 de manière à espacer les extrémités des bords 24 d'une distance inférieure à la longueur ou la largeur des batteries.

Les flasques 28 et 30 sont en outre pourvues d'ouïes, telles que 34, permettant une aération des batteries disposées dans le coffre 10 et d'un point de préhension 36 destiné a coopérer avec un appareil de levage permettant le montage de la batterie ainsi constitué et la dépose de cette dernière.

On voit enfin sur la figure 1 que le coffre 10 est complété par des moyens de maintien des éléments de batteries, réalisés sous la forme d'une tige 38 s'insérant dans des orifices 40 (figure 2) ménagés dans les bords pliés 22 et 24 des éléments de parois.

Bien entendu, d'autres types de moyens de maintien appropriés peuvent être envisagés.

Dans la description de l'invention, on a considéré que les éléments de paroi ont la forme d'un profilé en U.

Il serait toutefois possible, en variante, de doter le coffre de modules ayant des éléments de paroi de forme différente, notamment en forme de profilé I, en particulier pour la réalisation d'un coffrage par association de différents coffres.

On conçoit que le coffre de batteries selon l'invention, qui vient d'être d'écrit, qui utilise un ensemble de modules interchangeables, permet d'adapter l'encombrement total au nombre de batteries qu'il contient et donc de réduire son encombrement dans la mesure où l'on peut ainsi limiter l'espace non occupé.

Lorsque l'on désire augmenter le nombre de batteries embarquées, il convient soit, d'utiliser des modules ayant des longueurs accrues en conservant les flasques d'extrémités, soit, d'augmenter le nombre de modules empilés et de doter le coffre de flasques d'extrémités de hauteur augmentée en conséquence.

Dans le cas où l'on souhaite disposer d'une source d'alimentation de très grande capacité, il est possible de réaliser un coffrage formé de l'assemblage de plusieurs coffres agencés comme décrit précédemment et dont les batteries sont connectés en série ou en parallèle. Selon cette disposition, il est possible de prévoir un ou plusieurs modules commun à tous les coffres.

En outre, les bords des éléments de paroi permettent de délimiter un espace entre les rangées de batteries et donc d'assurer, conjointement avec les ouïes ménagées dans les flasques latéraux, un refroidissement des éléments de batteries par aération de ces derniers.

On notera également que l'invention permet de faciliter grandement les opérations de montage et de démontage des batteries dans la mesure où il convient simplement d'enlever l'un des flasques latéraux et de supprimer, le cas échéant, la tige de maintien pour pouvoir monter ou déposer les éléments de batteries.

On notera enfin que l'invention qui vient d'être décrite, permet de faciliter grandement les opérations de maintenance de la batterie, dans la mesure ou les ouïes d'aération permettent d'accéder aux éléments de batteries. Il est ainsi possible de mesurer la tension disponible aux bornes des éléments de batteries sans avoir à démonter le coffre.

## Revendications

1. Coffre pour ensemble de batteries d'accumulateurs électriques comprenant au moins cieux parois latérales (12, 14) s'étendant de façon parallèle et délimitant entre elles un logement de réception des batteries, **caractérisé en ce que** les parois latérales (12, 14) sont constituées d'un assemblage de modules (16) empilés comprenant chacun une paire d'éléments de paroi (18, 20) montés l'un en regard de l'autre.

2. Coffre selon la revendication 1, **caractérisé en ce que** chaque élément de paroi (18, 20) a la forme d'un profilé et comporte au moins un bord plié (24) délimitant, conjointement avec un bord plié de l'élément de paroi monté en regard, un support pour au moins une rangée de batteries.

3. Coffre selon l'une des revendications 1 et 2, **caractérisé en ce qu'**il comporte en outre des moyens (38) de maintien des batteries.

4. Coffre selon la revendication 3, **caractérisé en ce que** les moyens de maintien comportent une tige amovible (38) s'étendant au travers des bords pliés (22, 24) des éléments de paroi empilés.

5. Coffre selon l'une quelconque des revendications 1 à 4, **caractérisé en ce qu'**il comporte en outre deux flasques d'extrémité (28.30) munis chacun de pattes (32) de fixation des éléments de paroi (18, 20).

6. Coffre selon la revendication 5, **caractérisé en ce que** les flasques d'extrémités sont munis d'ouïes (34) d'aération des éléments de batteries.

7. Coffre selon l'une des revendications 5 et 6, **caractérisé en ce que** les flasques d'extrémité sont munis chacun d'un point (36) de préhension destiné à coopérer avec un appareil de levage.

8. Coffrage pour ensemble de batteries d'accumulateurs électriques, **caractérisé en ce qu'**il est constitué d'un assemblage de coffres (10) selon l'une quelconque des revendications 1 à 7.

## Patentansprüche

1. Behälter für einen Satz von elektrischen Akkumulatorbatterien, umfassend mindestens zwei Seitenwände (12, 14), die parallel verlaufen und zwischen sich einen Aufnahmeraum für die Batterien begrenzen, **dadurch gekennzeichnet, dass** die Seitenwände (12, 14) aus einer Baugruppe von übereinander gestapelten Modulen (16) gebildet werden, die jeweils ein Paar von Wandelementen (18, 20) umfassen, die einander gegenüberliegend montiert sind.

2. Behälter nach Anspruch 1, **dadurch gekennzeichnet, dass** jedes Wandelement (18, 20) die Form eines Profils besitzt und mindestens eine gebogene Kante (24) aufweist, die zusammen mit einer gebogenen Kante des gegenüberliegend montierten Wandelements eine Halterung für mindestens eine Reihe von Batterien begrenzt.

3. Behälter nach einem der Ansprüche 1 und 2, **dadurch gekennzeichnet, dass** er des weiteren Mittel (38) zur Wartung der Batterien umfaßt.

4. Behälter nach Anspruch 3, **dadurch gekennzeichnet, dass** die Mittel zur Wartung einen herausnehmbaren Stab (38) umf assen, der sich quer über die gebogenen Kanten (22, 24) der übereinander gestapelten Wandelemente erstreckt.

5. Behälter nach einem der Ansprüche 1 bis 4, **dadurch gekennzeichnet, dass** er des weiteren zwei Endflansche (28, 30) umfaßt, die mit Befestigungselementen (32) für die Wandelemente (18, 20) ausgestattet sind.

6. Behälter nach Anspruch 5, **dadurch gekennzeichnet, dass** die Endflansche mit Belüftungseinlässen (34) für die Batterie-Elemente ausgestattet sind.

7. Behälter nach einem der Ansprüche 5 und 6, **dadurch gekennzeichnet, dass** die Endflansche jeweils mit einer Greifstelle (36) ausgestattet sind, die zum Zusammenwirken mit einer Hebevorrichtung bestimmt ist.

8. Kasten für einen Satz von elektrischen Akkumulatorbatterien, **dadurch gekennzeichnet, dass** er aus einer Ansammlung von Behältern (10) nach einem der Amsprüche 1 bis 7 gebildet wird.

## Claims

1. Box for set of electric storage batteries comprising at least two lateral walls (12, 14) extending parallel and delimiting between them a compartment for receiving the batteries, **characterised in that** the lateral walls (12, 14) are composed of an assembly of stacked modules (16) each comprising a pair of wall elements (18, 20) mounted facing one another.

2. Box as claimed in Claim 1, **characterised in that** each wall element (18, 20) is in the form of a profiled section and has at least one folded edge (24) delimiting, jointly with a folded edge of the wall element mounted facing it, a support for at least one row of batteries.

3. Box as claimed in one of Claims 1 and 2, **characterised in that** it also has means (38) for retaining the batteries.

4. Box as claimed in Claim 3, **characterised in that** the retaining means include a removable rod (38) extending through the folded edges (22, 24) of the stacked wall elements.

5. Box as claimed in any one of Claims 1 to 4, **characterised in that** it also has two end panels (28, 30) each provided with lugs (32) for fixing the wall elements (18, 20).

6. Box as claimed in Claim 5, **characterised in that** the end panels are provided with air holes (34) for ventilation of the battery elements.

7. Box as claimed in one of Claims 5 and 6, **characterised in that** the end panels are each provided with a gripping point (36) intended to co-operate with a lifting tackle.

8. Casing for set of electric storage batteries, **characterised in that** it is composed of an assembly of boxes (10) as claimed in any one of Claims 1 to 7.
